# FASCICULE DE BREVET EUROPEEN

(11) **EP 2 063 227 B1**
(45) Date de publication et mention de la délivrance du brevet: **19.05.2010**
(21) Numéro de dépôt: 08169663.5
(22) Date de dépôt: 21.11.2008
(51) Int. Cl.: G01C 23/00, G01C 21/16

(54) **Panneau de commande virtuel de centrales d`attitude aéronautique**
Virtuelle Schalttafel für zentrale Fluglage-Steuereinheit für die Luftfahrt
Virtual control panel for aeronautical attitude control units

(30) Priorité: 23.11.2007 FR 0708216
(43) Date de publication de la demande: 27.05.2009
(73) Titulaire: Thales, 92200 Neuilly-sur-Seine (FR)
(72) Inventeur: Ferreira, Thierry, 33160 Saint Medard en Jalles (FR); Loizeau, Sylvie, 33600 Pessac (FR)
(74) Mandataire: Bréda, Jean-Marc

(56) Documents cités:
- GB-A- 1 480 652
- US-A- 4 283 705
- US-A1- 2005 125 141
- US-A1- 2006 080 004

## Description

Le domaine de l'invention est celui des équipements embarqués pour aéronef et de leur contrôle. Dans le domaine aéronautique et en particulier dans le domaine des hélicoptères, le poids des équipements embarqués est un facteur critique dans la mesure où il conditionne les performances de l'appareil. Les avionneurs et les hélicoptéristes sont donc très sensibles aux gains de poids et d'encombrement susceptibles d'être faits sur les équipements avioniques. Ces gains permettent d'augmenter la charge utile du porteur et donc sa valeur commerciale.

L'objectif permanent des concepteurs d'avionique est donc de concevoir des systèmes avioniques possédant un haut degré d'intégration afin de réduire le poids et l'encombrement global sans dégrader la sûreté de fonctionnement et les capacités fonctionnelles et opérationnelles des équipements proposés.

La présente invention concerne le contrôle d'un équipement appelé « AHRS », acronyme signifiant « Attitude and Heading Reference System ». La fonction de l'AHRS est de fournir aux écrans de visualisation et au pilote automatique les paramètres d'attitude et de cap. Classiquement, l'AHRS intègre trois gyroscopes, trois accéléromètres ainsi qu'un compas magnétique. Le compas magnétique fournit le cap du porteur. Les gyroscopes et les accéléromètres fournissent les paramètres d'attitude. Dans son mode normal de fonctionnement, l'AHRS utilise le magnétomètre pour fournir l'information de cap. On dit que l'AHRS est en mode « SLAVE » : c'est à dire, qu'il est asservi sur le compas magnétique. Or, près des pôles terrestres ou près de sources de perturbations comme les plates-formes pétrolières, le cap magnétique est peu utilisable car fortement perturbé par le champ magnétique terrestre. Les AHRS disposent dans ce cas d'un mode dit « DG » pour « Directional Gyro » dans lequel l'AHRS calcule un cap, non plus basé sur le capteur magnétique mais sur une fonction d'intégration des accélérations gyroscopiques. Pour utiliser correctement ce mode, le pilote doit entrer manuellement un cap qui servira de valeur d'initialisation au calcul d'intégration des mesures issues des gyroscopes de l'AHRS.

De la même façon, en cas de perte du capteur magnétomètre, le pilote peut manuellement sélectionner le mode DG de l'AHRS afin de disposer de l'information de cap fournie par les gyroscopes, une fois initialisés par le pilote. Pour sélectionner le mode de l'AHRS (DG ou SLAVE) ou permettre au pilote de corriger le cap DG, les fournisseurs d'AHRS proposent des panneaux de contrôle dédiés. Puisque la réglementation civile impose une redondance sur ce senseur primaire, deux centrales AHRS sont disposées dans l'aéronef et deux panneaux de commande sont installés, dédiés à chaque AHRS. Ces deux panneaux génèrent un surpoids et encombrent la partie centrale du cockpit.

Certains hélicoptéristes, pour gagner en poids, remplacent ces panneaux de contrôle par des boutons ou des rotacteurs de commande directement installés sur le cockpit. Dans ce cas, un gain de poids est effectué mais le problème de l'encombrement subsiste.

Au delà des problème d'encombrement et de performances, des problèmes ergonomiques liés aux interfaces mécaniques existantes subsistent. La correction de cap se fait toujours au travers d'un rotacteur qui, suivant le sens dans lequel le pilote le tourne et suivant l'importance de la rotation qu'il lui fait subir, fournit à l'AHRS non pas la valeur brute de cap d'initialisation, mais la vitesse à laquelle l'AHRS doit modifier le cap dernièrement utilisé. Cette vitesse peut varier de 2 degrés/seconde à 8 degrés/seconde en règle générale. Lorsque la correction à apporter est importante, l'action du pilote va donc être longue et nécessairement itérative.

Le dispositif selon l'invention consiste à supprimer les boîtiers de commande « AHRS » ou les boutons physiques pour les remplacer par un dispositif comprenant un seul « panneau de contrôle virtuel » commandé par un interface homme-machine et permettant de contrôler les deux AHRS soit séparément, soit simultanément. Le matériel n'est donc plus commandé par des panneaux de contrôle physiques mais via une seule fenêtre affichée sur les écrans de visualisation. Cette fenêtre présente en plus des fonctions assurées par les panneaux de contrôle classiques, des fonctions nouvelles et originales comme, par exemple, la commande simultanée des deux AHRS. Le contrôle de la fenêtre est effectué par un média interactif de type souris informatique ou « CCD » pour « Cursor Control Device » qui comporte une interface homme-machine de type à boule tournante (« track ball »), à surface tactile (« touch pad ») ou à manette (« joystick »). Un des intérêts majeurs de cette solution est que les moyens nécessaires au dispositif selon l'invention sont installés basiquement dans l'aéronef pour contrôler la sélection des pages affichées sur les écrans de visualisation. Les avantages de cette solution sont multiples :
- Le poids de l'avionique est considérablement diminué par la suppression de boîtiers de commande ;
- Le cockpit est épuré de tous panneaux ou boutons qui compliquent l'utilisation de la planche de bord. On réduit ainsi les temps d'apprentissage, les risques d'erreur,....
- L'encombrement du cockpit étant limité, il devient possible d'installer des écrans de visualisation plus grands ou d'autres équipements informatiques.

Plus précisément, l'invention a pour objet un dispositif de contrôle de deux centrales d'attitude de type AHRS pour aéronef, chaque AHRS comprenant au moins un premier ensemble de mesures magnétomètriques et au moins un second ensemble de mesure gyroscopique, chaque AHRS possédant deux modes de fonctionnement, le premier mode dit mode « slave » fournissant au système de vol les informations issues du premier ensemble, le second mode dit mode « DG » fournissant au système de vol les informations issues du second ensemble,
ledit dispositif comprenant au moins un interface homme-machine, au moins un dispositif de visualisation, des moyens de liaisons entre d'une part l'interface homme-machine et le dispositif de visualisation et d'autre part le dispositif de visualisation et les centrales AHRS,
**caractérisé en ce que** le dispositif de visualisation comporte des moyens d'affichage d'une fenêtre de commande et de contrôle des deux centrales d'attitude, ladite fenêtre comprenant trois zones, la première zone dédiée à la première centrale AHRS, la seconde zone dédiée à la seconde centrale AHRS, la troisième zone dédiée au contrôle simultané des deux centrales AHRS.

Avantageusement, le premier ensemble de symboles présenté dans la première zone et le second ensemble de symboles présenté dans la seconde zone comportent :
- Des représentations de moyens de sélection du premier ou du second mode de fonctionnement du premier ou du second AHRS ;
- Une représentation de la valeur du cap magnétique de l'aéronef ;
- Une représentation de la différence de cap existant entre l'indication de cap fournie par le premier ensemble de mesures magnétomètriques et l'indication de cap fournie par le second ensemble de mesure gyroscopique;
et le troisième ensemble de symboles présenté dans la troisième zone comporte une représentation de moyens de sélection simultanée sur les deux AHRS d'un des deux types de mode.

Avantageusement, la représentation de la valeur du cap magnétique de l'aéronef est différente en mode « slave » de la représentation de la valeur du cap magnétique de l'aéronef en mode « DG».

Avantageusement, en mode « DG », la représentation de la valeur du cap magnétique, lorsque l'AHRS fournit une mesure égale à la valeur affichée, est différente de la représentation de la valeur du cap magnétique lorsque l'AHRS fournit une mesure différente de la valeur affichée.

L'invention sera mieux comprise et d'autres avantages apparaîtront à la lecture de la description qui va suivre donnée à titre non limitatif et grâce aux figures annexées parmi lesquelles :
La figure 1 représente le synoptique général de la partie du système de vol comportant les AHRS et un dispositif de contrôle selon l'invention ;
Les figures 2 et 3 représentent une vue de la fenêtre de commande des deux AHRS dans deux configurations différentes selon l'invention.

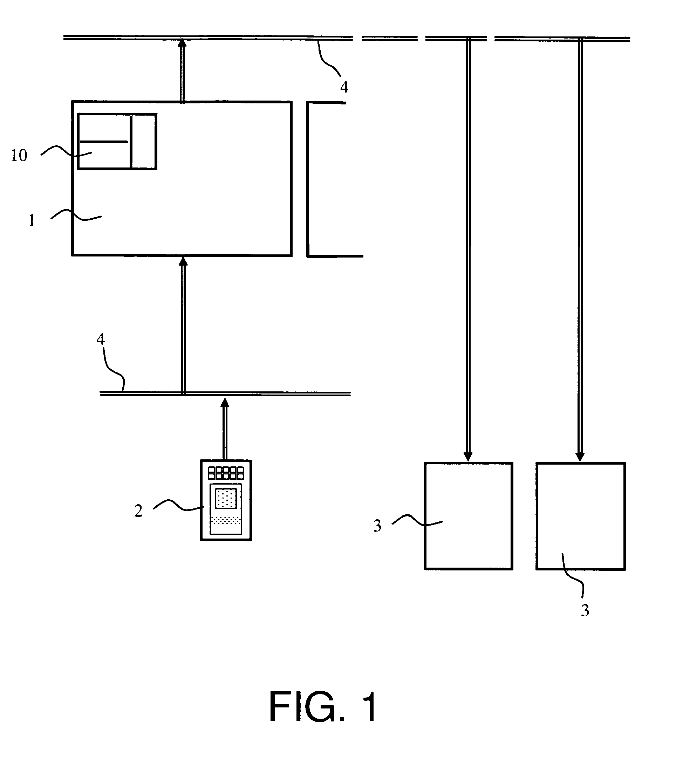

La figure 1 représente le synoptique général de la partie du système de vol comportant les deux AHRS 3 et un dispositif de contrôle selon l'invention. Plus précisément, le système comprend au moins une visualisation 1 comportant des moyens d'affichage d'une fenêtre 10 de commande et de contrôle des deux centrales d'attitude. Cette visualisation est reliée par des bus informatiques 4 :
- d'une part à un interface homme-machine 2 de type « souris » informatique ou encore « CCD », pour « Cursor Control Device » qui, à l'aide d'un pointeur informatique, permet d'afficher, de modifier ou de paramétrer les informations affichées ;
- d'autre part aux deux centrales de bord « AHRS » 3.

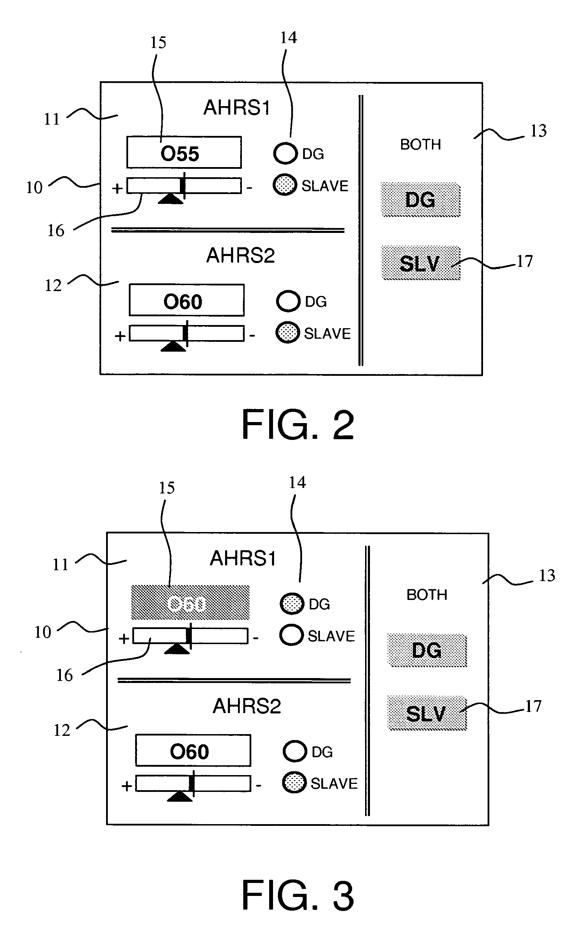

Comme indiqué sur les figures 2 et 3, la fenêtre affichée 10 comprend trois zones, la première zone 11 en haut à gauche des figures 2 et 3 dédiée à la première centrale AHRS, la seconde zone 12 en bas à gauche des figures 2 et 3 dédiée à la seconde centrale AHRS, la troisième zone 13 à droite des figures 2 et 3 dédiée au contrôle simultané des deux centrales AHRS. Il est, bien entendu, possible de modifier cette disposition en fonction du porteur, des spécifications de l'avionneur, des spécificités des centrales AHRS....

Le premier ensemble de symboles présenté dans la première zone et le second ensemble de symboles présenté dans la seconde zone comportent chacun :
- Des représentations de moyens de sélection du premier ou du second mode de fonctionnement des AHRS 3 . Ce sont deux voyants circulaires 14 marqués « DG » et « SLAVE » sur les figures 2 et 3. L'activation des voyants se traduit par un changement de couleur. Bien entendu, d'autres formes de voyants sont possibles ;
- Une représentation 15 de la valeur du cap magnétique de l'aéronef. Cette représentation peut être la valeur du cap inscrite dans un rectangle. Cette valeur vaut 055 sur la figure 2 et 060 sur la figure 3. Dans ce cas, il devient possible de changer soit la couleur de la valeur du cap, soit la couleur du rectangle qui l'entoure ;
- Une représentation 16 de la différence de cap existant entre l'indication de cap fournie par le premier ensemble de mesures magnétomètriques et l'indication de cap fournie par le second ensemble de mesures gyroscopiques. Cette différence est symbolisée sur les figures 2 et 3 par un curseur en forme de triangle noir coulissant sous une barre disposée sous la représentation de la valeur du cap 15. D'autres représentations sont également possibles afin d'assurer la même fonction ;

Le troisième ensemble de symboles présenté dans la troisième zone comporte une représentation de moyens de sélection simultanée sur les deux AHRS d'un des deux types de mode. Il est représenté par deux boutons grisés notés DG et SLV sur les figures 2 et 3.

Dans le dispositif selon l'invention, le procédé qui consiste à corriger un cap magnétique est le suivant :

En mode normal appelé SLAVE, le cap courant est affiché en vert, afin d'indiquer que la valeur de cap à afficher est la valeur courante. La fonction de correction de cap n'est donc pas disponible dans ce cas. Ce cas est représenté sur la figure 2 où les deux voyants « SLAVE » sont représentés en grisés, symbolisant qu'ils sont allumés et qu'ainsi, le mode « SLAVE » est choisi pour les deux AHRS.

Lorsque le mode DG est sélectionné, par exemple sur l'AHRS1 grâce au CCD interactif, le cap courant est affiché, par exemple, en cyan car il devint modifiable par le pilote. Cet état sélectionné DG est représenté par un voyant grisé sur la figure 3.

Après sélection via le CCD interactif comme représenté en figure 3, l'état sélectionné est différentié de l'état non sélectionné, par exemple en changeant la couleur du fond du rectangle entourant la valeur du cap afin de prévenir le pilote que l'information est en cours d'édition. La couleur affichée du fond est préférentiellement le cyan. Dans ce cas, la valeur du cap est affichée en mode inverse vidéo de façon à la distinguer de la couleur du fond. Le cap peut alors être modifié au moyen, par exemple, d'une boule tournante ou d'un rotacteur du CCD. Ce cap modifié est envoyé cycliquement à l'AHRS afin que celle-ci prenne en compte en temps réel l'information sélectionnée par le pilote et la restitue sur les écrans primaires de visualisation.

Après validation de la valeur choisie, par appui sur la touche "entrée" du CCD interactif, la couleur du fond revient en mode normal video et l'information de cap redevient le cyan, puisque sa valeur est toujours modifiable, le mode DG étant toujours sélectionné, même si le pilote n'est plus en mode édition.

Dans le cas ou la valeur retournée par l'AHRS et différente de la valeur sélectionnée par le pilote, la selection de cap est affichée, par exemple, en ambre afin de prévenir le pilote qu'un disfonctionnement vient d'être détecté.

Une barre disposée sous l'indication de cap permet de visualiser l'erreur de cap, à savoir la différence entre le cap magnétique et le cap gyroscopique.

D'un point de vue fonctionnel, ce panneau de contrôle virtuel offre les mêmes fonctions que peuvent offrir aujourd'hui des interfaces mécaniques. Il offre également les fonctions supplémentaires suivantes :

Le pilote peut passer en mode DG ou SLAVE l'une ou l'autre des AHRS par un simple click de son média interactif, mais peut aussi basculer les deux AHRS en même temps en mode DG ou SLAVE, ce que ne permettent pas aujourd'hui les interfaces mécaniques. Ainsi, à proximité des pôles, là ou les deux AHRS voient leur cap magnétique perturbé, le pilote peut passer les AHRS en mode DG en une seule action. Mais, en cas de panne du compas magnétique sur l'une des deux AHRS, le pilote peut passer cette AHRS en mode DG, tout en conservant l'autre AHRS en mode SLAVE afin maintenir un bon niveau de précision sur l'AHRS en bon fonctionnement.

L'interface de contrôle de l'AHRS permet de rentrer directement la valeur de cap désirée. En effet, le sélection du cap d'initialisation se fait au moyen d'un rotacteur ou d'un clavier numérique avec visualisation sur le panneau de contrôle de la valeur sélectionnée, ce qui permet de saisir plus rapidement et sans itération la valeur de cap souhaitée.

La définition de l'interface virtuelle intègre des contrôles sur les retours envoyés par l'AHRS, ce que ne permet pas une interface mécanique. En effet, dans le cas d'interfaces mécaniques, si l'AHRS ne reçoit pas correctement l'information de correction ou tout simplement, si l'AHRS met plus de temps à corriger l'information de cap, le pilote peut ne pas s'en apercevoir car aucun message de panne n'est remonté au pilote. Au travers de l'interface virtuelle selon l'invention, dans le cas ou la valeur de cap retournée par l'AHRS n'est pas la même que celle sélectionnée par le pilote, la couleur de la valeur sélectionnée par le pilote peut être d'une couleur différente de celle habituellement affichée afin de l'avertir.

## Revendications

1. Dispositif de contrôle de deux centrales d'attitude (3) de type AHRS pour aéronef, chaque AHRS comprenant au moins un premier ensemble de mesures magnétomètriques et au moins un second ensemble de mesure gyroscopique, chaque AHRS possédant deux modes de fonctionnement, le premier mode dit mode « slave » fournissant au système de vol les informations issues du premier ensemble, le second mode dit mode « DG » fournissant au système de vol les informations issues du second ensemble,
ledit dispositif comprenant au moins un interface homme-machine (2), au moins un dispositif de visualisation (1), des moyens de liaisons (4) entre d'une part l'interface homme-machine et le dispositif de visualisation et d'autre part le dispositif de visualisation et les centrales AHRS,
**caractérisé en ce que** le dispositif de visualisation comporte des moyens d'affichage d'une fenêtre (1) de commande et de contrôle des deux centrales d'attitude, ladite fenêtre comprenant trois zones (11, 12, 13), la première zone (11) dédiée à la première centrale AHRS, la seconde zone (12) dédiée à la seconde centrale AHRS, la troisième zone (13) dédiée au contrôle simultané des deux centrales AH RS.

2. Dispositif de contrôle selon la revendication 1, **caractérisé en ce que** le premier ensemble de symboles présenté dans la première zone et le second ensemble de symboles présenté dans la seconde zone comportent :
• Des représentations (14) de moyens de sélection du premier ou du second mode de fonctionnement du premier ou du second AHRS ;
• Une représentation (15) de la valeur du cap magnétique de l'aéronef ;
• Une représentation (16) de la différence de cap existant entre l'indication de cap fournie par le premier ensemble et l'indication de cap fournie par le second ensemble ;
et que le troisième ensemble de symboles présenté dans la troisième zone comporte une représentation (17) de moyens de sélection simultanée sur les deux AHRS d'un des deux types de mode.

3. Dispositif de contrôle selon la revendication 2, **caractérisé en ce que** la représentation de la valeur du cap magnétique de l'aéronef est différente en mode « slave » de la représentation de la valeur du cap magnétique de l'aéronef en mode « DG».

4. Dispositif de contrôle selon la revendication 3, **caractérisé en ce que**, en mode « DG », la représentation de la valeur du cap magnétique lorsque l'AHRS fournit une mesure égale à la valeur affichée est différente de la représentation de la valeur du cap magnétique lorsque l'AHRS fournit une mesure différente de la valeur affichée.

## Claims

1. A control device for two AHRS type attitude units (3) for aircraft, each AHRS comprising at least one first set of magnetometric measurements and at least one second set of gyroscopic measurements, each AHRS having two operating modes, a first mode, referred to as the "slave" mode and providing the flight system with the information originating from the first set, a second mode, referred to as the "DG" mode and providing the flight system with the information originating from the second set,
said device comprising at least one man-machine interface (2), at least one display device (1), connection means (4) between the man-machine interface and the display device, on the one hand, and the display device and the AHRS units, on the other hand,
**characterised in that** the display device includes means for displaying an instrumentation and control window (1) for the two attitude units, said window including three zones (11, 12, 13), the first zone (11) dedicated to the first AHRS unit, the second zone (12) dedicated to the second AHRS unit, the third zone (13) dedicated to the simultaneous control of the two AHRS units.

2. The control device according to claim 1, **characterised in that** the first set of symbols shown in the first zone and the second set of symbols shown in the second zone include:
• representations (14) of the means of selecting the first or the second operating mode of the first or the second AHRS;
• a representation (15) of the value of the magnetic heading of the aircraft;
• a representation (16) of the difference in the heading which exists between the heading indication provided by the first set and the heading indication provided by the second set;
and **characterised in that** the third set of symbols shown in the third zone includes a representation (17) of means of simultaneously selecting one of the two types of mode from the two AHRS.

3. The control device according to claim 2, **characterised in that** the representation of the magnetic heading value of the aircraft is different in "slave" mode to the display of the magnetic heading value of the aircraft in "DG" mode.

4. The control device according to claim 3, **characterised in that**, in "DG" mode, the representation of the magnetic heading value when the AHRS provides a measurement equal to the displayed value differs from the display of the magnetic heading value when the AHRS provides a measurement which differs from the displayed value.

## Patentansprüche

1. Überwachungsvorrichtung für zwei AHRS-Fluglageeinheiten (3) für Flugzeuge, wobei jedes ARHS wenigstens einen ersten Satz von magnetometrischen Messungen und wenigstens einen zweiten Satz von gyroskopischen Messungen umfasst, wobei jedes ARHS zwei Betriebsmodi hat, einen ersten Modus, "Slave"-Modus genannt, der das Flugsystem mit den Informationen aus dem ersten Satz versorgt, und einen zweiten Modus, "DG"-Modus genannt, der das Flugsystem mit den Informationen aus dem zweiten Satz versorgt,
wobei die genannte Vorrichtung wenigstens eine Mensch-Maschine-Schnittstelle (2), wenigstens ein Anzeigegerät (1), Verbindungsmittel (4) zwischen der Mensch-Maschine-Schnittstelle und dem Anzeigegerät einerseits und dem Anzeigegerät und den AHRS-Einheiten andererseits umfasst,
**dadurch gekennzeichnet, dass** das Anzeigegerät Mittel zum Anzeigen eines Schalt- und Überwachungsfensters (1) für die zwei Lageeinheiten aufweist, wobei das Fenster drei Zonen (11, 12, 13) beinhaltet, eine für die erste AHRS-Einheit dedizierte erste Zone (11) und eine für die zweite AHRS-Einheit dedizierte zweite Zone (12) und eine für die gleichzeitige Überwachung der beiden AHRS-Einheiten dediziert dritte Zone (13).

2. Überwachungsvorrichtung nach Anspruch 1, **dadurch gekennzeichnet, dass** der in der ersten Zone gezeigte erste Satz von Symbolen und der in der zweiten Zone gezeigte zweite Satz von Symbolen Folgendes beinhalten:
• Darstellungen (14) der Mittel zum Auswählen des ersten oder des zweiten Betriebsmodus des ersten oder des zweiten AHRS;
• eine Darstellung (15) des Wertes des magnetischen Kurses des Flugzeugs;
• eine Darstellung (16) der Kursdifferenz, die zwischen der von dem ersten Satz gegebenen Kursanzeige und der von dem zweiten Satz gegebenen Kursanzeige existiert;
und **dadurch gekennzeichnet, dass** der in der dritten Zone gezeigte dritte Satz von Symbolen eine Darstellung (17) von Mitteln zum gleichzeitigen Auswählen eines der beiden Modustypen von den zwei AHRS beinhaltet.

3. Überwachungsvorrichtung nach Anspruch 2, **dadurch gekennzeichnet, dass** sich die Anzeige des Wertes des magnetischen Kurses des Flugzeugs im "Slave"-Modus von der Anzeige des Wertes des magnetischen Kurses des Flugzeugs im "DG"-Modus unterscheidet.

4. Überwachungsvorrichtung nach Anspruch 3, **dadurch gekennzeichnet, dass** sich im "DG"-Modus die Darstellung des Wertes des magnetischen Kurses, wenn das AHRS einen Messwert gibt, der gleich dem angezeigten Wert ist, von der Anzeige des Wertes des magnetischen Kurses unterscheidet, wenn das AHRS einen Messwert gibt, der sich von dem angezeigten Wert unterscheidet.
